# EUROPÄISCHE PATENTSCHRIFT

(11) **EP 2 699 476 B1**
(45) Veröffentlichungstag und Bekanntmachung des Hinweises auf die Patenterteilung: **19.11.2014**
(21) Anmeldenummer: 13709380.3
(22) Anmeldetag: 05.03.2013
(51) Int. Cl.: B64D 13/02, F16K 39/02

(54) **VENTIL ZUR STEUERUNG DES INNENDRUCKS IN EINER KABINE EINES LUFTFAHRZEUGS**
VALVE FOR CONTROLLING THE INTERNAL PRESSURE IN A CABIN OF AN AIRCRAFT
SOUPAPE DE COMMANDE DE LA PRESSION INTERIEURE DANS UNE CABINE D'UN AVION

(30) Priorität: 16.03.2012 DE 102012204217
(43) Veröffentlichungstag der Anmeldung: 26.02.2014
(73) Patentinhaber: Nord-Micro AG & Co. OHG, 60388 Frankfurt (DE)
(72) Erfinder: STEINERT, Martin, 63500 Seligenstadt (DE); VRANJES, Dusan, 60388 Frankfurt (DE)
(74) Vertreter: Flügel Preissner Kastel Schober
(86) Internationale Anmeldenummer: PCT/EP2013/054433
(87) Internationale Veröffentlichungsnummer: WO 2013/135534

(56) Entgegenhaltungen:
- DE-A1- 19 713 125
- DE-A1-102009 010 150
- DE-A1-102010 033 827

## Beschreibung

Die vorliegende Erfindung betrifft ein Ventil zur Steuerung des Innendrucks in einer Kabine eines Luftfahrzeugs, mit einer ersten Klappe und einer zweiten Klappe, die in einem Rahmen gelagert sind, wobei die Klappen einen den Druck verändernden Fluidstrom zwischen der Umgebung und der Kabine durch eine Öffnung des Ventils steuern, wobei die erste Klappe mit Abstand zu einer Vorderkante des Rahmens und die zweite Klappe an einer Hinterkante des Rahmens gelagert sind.

Derartige Ventile werden zur Steuerung des Drucks innerhalb einer Flugzeugkabine oder einer Druckkammer verwendet. Zur Steuerung des Drucks in einer Flugzeugkabine ist das Ventil in einer Öffnung des Flugzeugrumpfes eingebracht. Je nach Stellung des Ventils kann Luft ein- oder ausströmen. Somit kann mithilfe des Ventils der Druck in der Kabine erhöht oder abgebaut werden. Zudem kann die in der Flugzeugkabine befindliche verbrauchte Luft über das Ventil abgelassen werden.

Aus DE 10 2009 010 150 A1 geht ein Ventil hervor, dass zwei verstellbare Klappen aufweist. Je nach Stellung der Klappen strömt entweder Luft aus der Flugzeugkabine heraus oder hinein. Die beiden Klappen sind in einer Öffnung eines Ventilrahmens gelagert. Die heckseitige Klappe weist eine Abdeckung auf, die in der Einströmstellung der Klappen einen heckseitigen Öffnungsbereich verschließt, um ein Ausströmen der Luft zwischen der heckseitigen Klappe und der Ventilrahmung in dem heckseitigen Öffnungsbereich zu verhindern.

Aufgabe der Erfindung ist es, ein Ventil der eingangs genannten Art bereitzustellen, das in einer Einströmstellung ein Ausströmen der Luft sicher verhindert.

Diese Aufgabe wird durch das Ventil gemäß dem Gegenstand des Anspruchs 1 gelöst. Vorteilhafte Ausgestaltungen sind Gegenstand der Ansprüche 2 bis 11.

Bei dem erfindungsgemäßen Ventil ist eine Verschlusseinrichtung vorgesehen, die in einer Einströmstellung der Klappen eine Ausströmöffnung verschließt, die durch die Klappen begrenzt wird. Die Verschlusseinrichtung ist an einer der Klappen schwenkbeweglich gelagert. Der Verschlusseinrichtung ist eine Verriegelungseinrichtung zugeordnet, die mit der Verschlusseinrichtung derart zusammenwirkt, dass die Verschlusseinrichtung bei der Schwenkbewegung der Klappen die Ausströmöffnung verschließt.

Das erfindungsgemäße Ventil wird dazu verwendet, den Innendruck des Luftfahrzeugs zu steuern. Das Ventil befindet sich zum Beispiel in der Außenhaut des Luftfahrzeugs und öffnet und verschließt die Öffnung, die eine Verbindung zwischen der Kabine und der Umgebung des Luftfahrzeugs herstellt. In einer ersten Öffnungsposition, auch Ausströmposition genannt, sind vorzugsweise beide Klappen leicht gekippt, so dass Luft aus der Kabine nach außen strömen kann. Da der Innendruck der Kabine in Reiseflughöhe bei Luftfahrzeugen üblicherweise höher ist als der Druck der Umgebung, strömt die Luft von der Kabine nach außen.

Bei einem unvorhergesehenen Druckverlust in der Kabine werden vorzugsweise beide Klappen in eine Einströmstellung geschwenkt, bei der die erste Klappe in einen Luftstrom, der an dem Luftfahrzeug vorbeiströmt, hineinragt. Dadurch wird besonders viel Luft von der Umgebung in die Kabine gelenkt. Bei gleichzeitigem Absinken des Flugzeugs aus der Reiseflughöhe kann somit der Innendruck in der Kabine erhöht werden.

Das erfindungsgemäße Ventil verschließt in der Einströmstellung die Ausströmöffnung durch die Verschlusseinrichtung, so dass ein Ausströmen der eingeströmten Luft nicht mehr möglich ist. Hierdurch erhöht sich vorteilhaft die Menge des eingeströmten Fluidstroms, da ein Ausfluss durch die Ausströmöffnung verhindert werden kann. Das Verschließen der Ausströmöffnung durch die Verschlusseinrichtung wird durch die Verriegelungseinrichtung bewerkstelligt, die der Verschlusseinrichtung zugeordnet ist.

Ein weiterer Vorteil des erfindungsgemäßen Ventils ist, dass zum Schwenken der Verschlusseinrichtung relativ zu der ersten Klappe kein zusätzlicher Stellantrieb, wie beispielsweise ein Elektormotor oder dergleichen, notwendig ist. Dies vermeidet die Gefahr eines Versagens des Stellmotors und macht das erfindungsgemäße Ventil leichter und kostengünstiger.

Vorteilhaft ist die Verschlusseinrichtung als Verschlussklappe ausgebildet. Dabei kann die erste Klappe wenigstens einen Tragarm aufweisen, an dem die Verschlusseinrichtung schwenkbeweglich gelagert ist.

Vorteilhaft weist die Verriegelungseinrichtung wenigstens einen Bolzen und eine mit dem Bolzen zusammenwirkende Aufnahmeeinrichtung auf, wobei bei einem Verschwenken der Klappen in die Einströmstellung der Bolzen von der Aufnahmeeinrichtung aufnehmbar ist, um die Verschlussklappe in eine Verriegelungsposition zu überführen.

Vorteilhafterweise ist der Bolzen zu einer Schwenkachse der Verschlusseinrichtung exzentrisch gelagert. Durch eine Schwenkbewegung der ersten Klappe wird die Verschlusseinrichtung über den Bolzen mit der Aufnahmeeinrichtung in Verbindung gebracht und die Verschlusseinrichtung schwenkt aufgrund der Exzentrizität des Bolzens. Die Verschlusseinrichtung wird so in die Verriegelungsposition überführt. In der Verriegelungsposition verschließt die Verschlusseinrichtung die Ausströmöffnung.

Vorteilhaft ist bei der beschriebenen Verriegelungseinrichtung ein rein mechanisches Zusammenwirken zwischen dem Bolzen und der Aufnahmeeinrichtung vorgesehen. Dies macht die Verschlusseinrichtung besonders fehlerunanfällig, da kein Stellantrieb vorgesehen ist.

Bei einer vorteilhaften Ausgestaltung ist der wenigstens eine Bolzen an der Verschlusseinrichtung angeordnet. Die Aufnahmeeinrichtung ist vorteilhaft an dem Rahmen angeordnet.

Die Aufnahmeeinrichtung ist demnach relativ zu der ersten Klappe oder der Verschlusseinrichtung fest angeordnet. Die Schwenkbewegung der ersten Klappe und damit der Verschlusseinrichtung führt den Bolzen der Aufnahmeeinrichtung zu. Durch das Eingreifen des Bolzens in die Aufnahmeeinrichtung wird vorteilhafterweise die Verschlusseinrichtung geschwenkt.

Vorteilhaft ist an der Verschlusseinrichtung wenigstens eine Feder angeordnet, die mit dem wenigstens einen Tragarm zusammenwirkt, um bei einem Verschwenken der Klappen in die Einströmstellung die Verschlusseinrichtung von der Verriegelungsposition in eine Verschlussposition vorzuspannen.

Bei einer vorteilhaften Ausführungsform ist die erste Klappe und die zweite Klappe über wenigstens eine Koppelstange miteinander verbunden.

Vorteilhaft ist eine Stelleinrichtung vorgesehen, mit der die Klappen von der Schließstellung in die Ausströmstellung und die Einströmstellung verstellbar sind.

Vorteil der Koppelstange ist es, dass nur eine Stelleinrichtung benötigt wird, um die erste Klappe und die zweite Klappe zwischen der Schließstellung, der Ausströmstellung und der Einströmstellung zu verschwenken.

Vorteilhaft sind die Klappen über die Stelleinrichtung gleichläufig verstellbar. Weiter vorteilhaft ist die zweite Klappe über eine Stellstange mit der Stelleinrichtung verbunden.

In einer vorteilhaften Ausgestaltung ist vorgesehen, dass die erste Klappe annähernd mittig an dem Rahmen gelagert ist, und dass die zweite Klappe randseitig an dem Rahmen gelagert ist.

Nachfolgend wird die Erfindung anhand eines Ausführungsbeispiels näher beschrieben, das in der Zeichnung schematisch dargestellt ist. Hierbei zeigen:
- Fig. 1: einen Querschnitt des erfindungsgemäßen Ventils in einer Schließstellung der Klappen;
- Fig. 2: einen Querschnitt des erfindungsgemäßen Ventils in einer Ausströmstellung der Klappen;
- Fig. 3: einen Querschnitt des erfindungsgemäßen Ventils in einer zweiten Kippstellung der Klappen; und
- Fig. 4: einen Querschnitt des erfindungsgemäßen Ventils in einer Einströmstellung der Klappen.

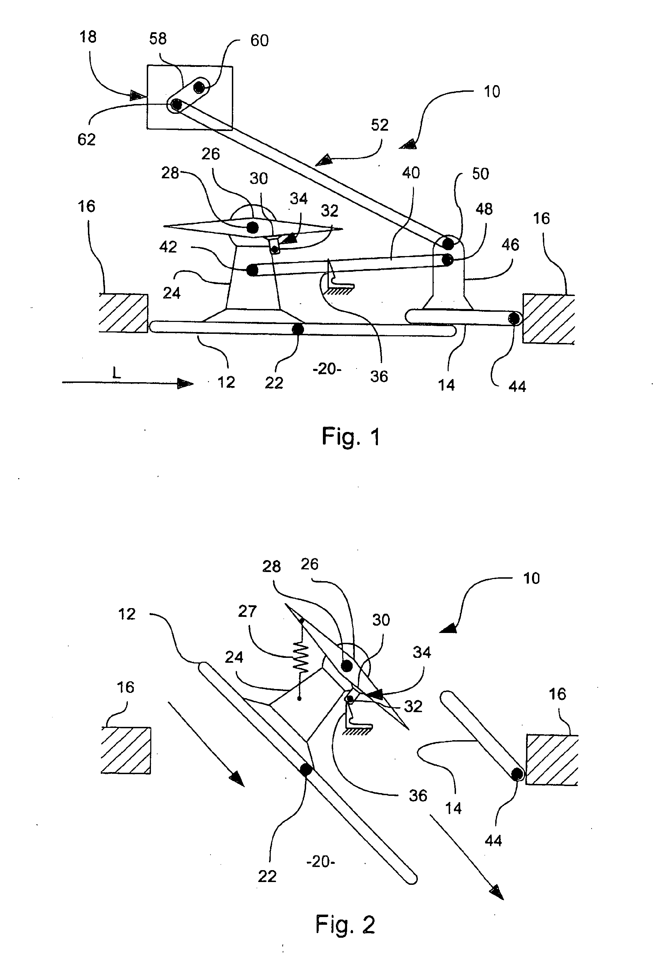

Fig. 1 zeigt ein Ventil 10, das eine erste bugseitige Klappe 12, eine zweite heckseitige Klappe 14, einen Rahmen 16 und eine Stelleinrichtung 18 aufweist. Das Ventil hat eine Öffnung 20, die von dem Rahmen 16 begrenzt wird. Die Öffnung 20 weist einen rechteckigen Querschnitt auf. In einer Schließstellung verschließen die erste Klappe 12 und die zweite Klappe 14 die Öffnung 20. Dies ist in Fig. 1 dargestellt.

Die erste Klappe 12 ist um eine erste Schwenkachse 22 schwenkbar, die etwa mittig in der Öffnung 20 angebracht ist. An der ersten Klappe 12 sind zwei beabstandete Tragarme 24 vorgesehen, an dem eine Verschlusseinrichtung 26 angebracht ist. In den Figuren 1 bis 4 ist aufgrund der Querschnittsdarstellung des Ventils 10 nur ein Tragarm 24 abgebildet. Die Verschlusseinrichtung 26 ist als eine Verschlussklappe ausgebildet. Über eine dritte Schwenkachse 28 ist die Verschlusseinrichtung 26 an dem Tragarm 24 angebracht, so dass die Verschlusseinrichtung 26 an dem Tragarm 24 schwenkbeweglich gelagert ist.

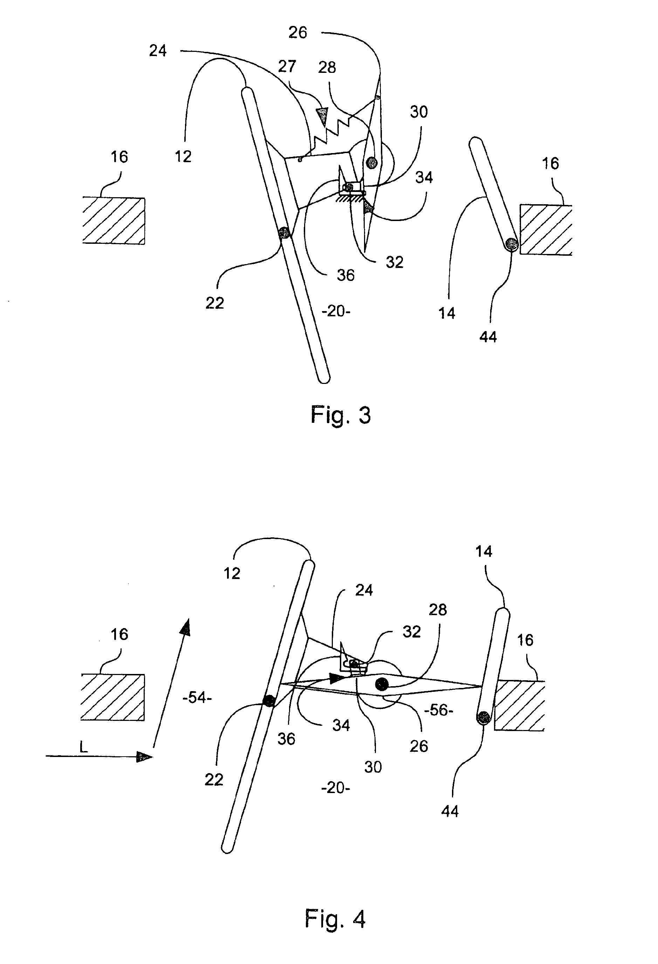

Die Verschlusseinrichtung 26 ist mittels zweier Federn 27 gegen die beiden Tragarme 24 vorgespannt. Die Federn 27 sind an der Verschlusseinrichtung 26 und an dem Tragarm 24 befestigt. Die Verschlusseinrichtung 26 ist daher ohne Einwirkung äußerer Kräfte relativ zu dem Tragarm 24 und der ersten Klappe 12 festgestellt. Für eine übersichtliche Darstellung ist die Feder 27 lediglich in den Figuren 2 und 3 dargestellt. Die Feder 27 ist eine mechanische Spannfeder. Eine nicht gezeigte weitere Ausführungsform sieht eine Spiralfeder vor, die auf der dritten Schwenkachse 28 gelagert ist. Die Spiralfeder spannt auch die Verschlusseinrichtung 26 gegen den Tragarm 26 vor.

Der Tragarm 24 ist exzentrisch zu der ersten Schwenkachse 22 an der ersten Klappe 12 angebracht. Die Verschlusseinrichtung 26 weist zwei Vorsprünge 30 auf, an denen jeweils ein Bolzen 32 angeformt ist. In den Figuren 1 bis 4 sind aufgrund der Querschnittsdarstellung des Ventils 10 nur ein Vorsprung 30 und ein Bolzen 32 dargestellt. Die Bolzen 32 sind jeweils dem Rahmen 16 zugewandt und exzentrisch zu der dritten Schwenkachse 28 angeordnet. Die erste Klappe 12 weist daher zwei Tragarme 24, zwei Vorsprünge 30 und zwei Bolzen 32 auf. Der Vorsprung 30 und der Bolzen 32 bilden einen Teil einer Verriegelungseinrichtung 34. Der zweite Teil der Verriegelungseinrichtung bildet eine Aufnahmeeinrichtung 36. Zwei Aufnahmeeinrichtungen 36 sind auf gegenüberliegenden Seiten an dem Rahmen 16 befestigt.

An dem Tragarm 24 ist eine erste Anlenkung 42 vorgesehen, an der eine Koppelstange 40 gelagert ist. Die Koppelstange 40 ist nur an einem der beiden Tragarme 24 der ersten Klappe 12 vorgesehen.

Die zweite Klappe 14 ist um eine zweite Schwenkachse 44 schwenkbar, die benachbart zu dem Rahmen 16 angeordnet ist und mit dem Rahmen 16 abschließt. In der Schließposition überlappt die zweite Klappe 14 die erste Klappe 12, so dass die Öffnung 20 von den Klappen 12 und 14 verschlossen wird.

An der zweiten Klappe 14 ist ein Ansteuervorsprung 46 vorgesehen, der eine zweite Anlenkung 48 und eine dritte Anlenkung 50 auf weist. An der zweiten Anlenkung 48 ist die Koppelstange 40 schwenkbar gelagert. Somit ist die zweite Klappe 14 über die Koppelstange 40 mit der ersten Klappe 12 verbunden. Außerdem ist dem Ansteuervorsprung 46 über die dritte Anlenkung 50 eine Stellstange 52 schwenkbar gelagert.

Die Stelleinrichtung 18 weist eine Kurbel 58 auf, die mit einer Antriebswelle 60 verbunden ist. Über eine vierte Anlenkung 62 ist die Kurbel 58 schwenkbar mit der Stellstange 52 verbunden. Die Stelleinrichtung 18 weist einen Stellantrieb, beispielsweise einen Elektromotor auf, der die Antriebswelle 60 antreibt. Über die Kurbel 58 und die Stellstange 52 wird die zweite Klappe 14 mittels des zweiten Ansteuervorsprungs 46 verschwenkt.

Die erste 12 und die zweite Klappe 14 sowie die Verschlusseinrichtung 26 können Vorsprünge oder andere Einrichtungen aufweisen, die die Luftströmung entlang der Klappen 12, 14 verbessern.

Fig. 2 zeigt das Ventil 10 ohne Stelleinrichtung 18 und den Ansteuervorsprung 46. Die Stelleinrichtung 18 schwenkt die erste Klappe 12 und die zweite Klappe 14 im Uhrzeigersinn in die in Fig. 2 gezeigte Ausströmstellung bei der Luft aus der Kabine in die Umgebung strömen kann. Da die erste Klappe 12 und die zweite Klappe 14 über die Koppelstange 40 miteinander verbunden sind, bewegen sich die Klappen 12 und 14 synchron. Durch die Federvorspannung der Feder 27 wird die Verschlusseinrichtung 26 relativ zu dem Tragarm 24 und der ersten Klappe 12 nicht geschwenkt, da der Bolzen 32 die Aufnahmereinrichtung 36 noch nicht berührt.

In der in Fig. 3 gezeigten Stellung der Klappen 12 und 14 greift der Bolzen 32 der Verschlusseinrichtung 26 in die Aufnahmereinrichtung 36 ein. Da der Bolzen 32 zu der dritten Schwenkachse 28 exzentrisch gelagert ist, bewirkt die Exzentrizität des Bolzens 32 aufgrund der Schwenkbewegung der ersten Klappe 12 eine Drehung der Verschlusseinrichtung 26 im Uhrzeigersinn relativ zu der ersten Klappe 12. Die Feder 27 wird dadurch gedehnt.

Fig. 4 zeigt die Klappen 12 und 14 in der Einströmstellung. Die erste Klappe 12 teilt die Öffnung 20 in der in dieser Stellung in eine Einströmöffnung 54 und eine Ausströmöffnung 56. In der Einströmstellung wird die Verschlusseinrichtung 26 über die Verriegelungseinrichtung 34 derart um die dritte Schwenkachse 28 gedreht, dass die Verschlusseinrichtung 26 die Ausströmöffnung 56 zwischen der ersten Klappe 12 und der zweiten Klappe 14 verschließt. Dabei berühren die Endkanten der Verschlusseinrichtung 26 die erste Klappe 12 und die zweite Klappe 14. Die erste Klappe 12 ragt in der Einströmstellung in den Fluidstrom L.

Die Funktionsweise des Ventils 10 soll nun näher beschrieben werden.

In der in Fig. 1 gezeigten Schließstellung verschließen die erste Klappe 12 und die zweite Klappe 14 die Öffnung 20 vollständig, so dass keine Luft von der Kabine an die Umgebung oder umgekehrt strömen kann.

Durch die Stelleinrichtung 18 können die Klappen 12 und 14 in die in Fig. 2 gezeigte Ausströmstellung bewegt werden. In dieser Stellung kann Luft aus der Kabine in die Umgebung strömen kann. Eine weitere Bewegung der Stelleinrichtung 18 bewirkt ein weiteres Schwenken der Klappen 12 und 14.

Am Anfang dieser Schwenkbewegung berührt der Bolzen 32 noch nicht die Aufnahmeinrichtung 36. Bei einer weiteren Schwenkbewegung berührt der Bolzen 32 die Aufnahmeinrichtung 36, wodurch eine relative Schwenkbewegung der Verschlusseinrichtung 26 bezüglich der ersten Klappe 12 bewirkt wird, wie dies in Fig. 3 dargestellt ist.

Beim Erreichen der Einströmstellung gemäß Fig. 4 ist die Verschwenkung der Verschlusseinrichtung 26 bezüglich der ersten Klappe 12 derart ausgeprägt, dass die Verschlusseinrichtung 26 die Ausströmöffnung 56 vollständig verschließt. Die Verschlusseinrichtung 26 ist dann in einer Verriegelungsposition. Gleichzeitig ragt die erste Klappe 12 derart in die Fluidströmung L ein, sodass die Fluidströmung L in die Kabine gelenkt wird. Die Verschlusseinrichtung 26 verhindert ein Ausströmen der durch die Einströmöffnung 54 eingeströmte Luft durch Ausströmöffnung 56, wodurch die Gesamtmenge der eingeströmten Fluidströmung L in die Kabine erhöht werden kann.

Vorteil des erfindungsgemäßen Ventils 10 ist, dass für die Schwenkung der Verschlusseinrichtung 26 kein separater Stellantrieb notwendig ist. Das Ventil 10 weist dadurch einen einfacheren Aufbau auf und kann kostengünstig hergestellt werden, da kein Stellantrieb benötigt wird. Außerdem wird die Ausströmöffnung 56 allein durch die Drehung der Klappen 12 und 14 und die dadurch verursachte Drehung der Verschlusseinrichtung 26 verschlossen, da eine rein mechanische Wechselwirkung zwischen der Verschlusseinrichtung 26 und der Aufnahmeinrichtung 36 bereitgestellt wird. Es ist bei dem Ventil 10 kein Stellantrieb vorgesehen, der funktionsunfähig werden kann und dadurch das Einströmen der Luft verschlechtern würde.

### Bezugszeichenliste

- 10: Ventil
- 12: erste Klappe
- 14: zweite Klappe
- 16: Rahmen
- 18: Stelleinrichtung
- 20: Öffnung
- 22: erste Schwenkachse
- 24: Tragarm
- 26: Verschlusseinrichtung
- 27: Feder
- 28: dritte Schwenkachse
- 30: Vorsprung
- 32: Bolzen
- 34: Verriegelungseinrichtung
- 36: Aufnahmeinrichtung
- 40: Koppelstange
- 42: erste Anlenkung
- 44: zweite Schwenkachse
- 46: Ansteuervorsprung
- 48: zweite Anlenkung
- 50: dritte Anlenkung
- 52: Stellstange
- 54: Einströmöffnung
- 56: Ausströmöffnung
- 58: Kurbel
- 60: Antriebswelle
- 62: vierte Anlenkung
- L: Fluidströmung

## Patentansprüche

1. Ventil zur Steuerung des Innendrucks in einer Kabine eines Luftfahrzeugs, mit einer ersten Klappe (12) und einer zweiten Klappe (14), die in einem Rahmen (16) gelagert sind, wobei die Klappen (12, 14) einen den Druck verändernden Fluidstrom (L) zwischen der Umgebung und der Kabine durch eine Öffnung (20) des Ventils (10) steuern, wobei die erste Klappe (12) mit Abstand zu einer Vorderkante des Rahmens (16) und die zweite Klappe (14) an einer Hinterkante des Rahmens (16) gelagert sind, wobei eine Verschlusseinrichtung (26) vorgesehen ist, die in einer Einströmstellung der Klappen (12, 14) eine Ausströmöffnung (56) verschließt, die durch die Klappen (12, 14) begrenzt wird, **dadurch gekennzeichnet, dass** die Verschlusseinrichtung (26) an einer der Klappen (12, 14) schwenkbeweglich gelagert ist und dass der Verschlusseinrichtung (26) eine Verriegelungseinrichtung (34) zugeordnet ist, die mit der Verschlusseinrichtung (26) derart zusammenwirkt, dass die Verschlusseinrichtung (26) bei einer Schwenkbewegung der Klappen (12, 14) die Ausströmöffnung (56) verschließt.

2. Ventil nach Anspruch 1, **dadurch gekennzeichnet, dass** die Verschlusseinrichtung (26) als Verschlussklappe ausgebildet ist.

3. Ventil nach Anspruch 1 oder 2, **dadurch gekennzeichnet, dass** die erste Klappe (12) wenigstens einen Tragarm (24) aufweist, an dem die Verschlusseinrichtung (26) schwenkbeweglich gelagert ist.

4. Ventil nach einem der vorhergehenden Ansprüche, **dadurch gekennzeichnet, dass** die Verriegelungseinrichtung (34) wenigstens einen Bolzen (32) und eine mit dem Bolzen (32) zusammenwirkende Aufnahmeeinrichtung (36) aufweist, wobei bei einem Verschwenken der Klappen (12, 14) in die Einströmstellung der Bolzen (32) von der Aufnahmeeinrichtung (36) aufnehmbar ist, um die Verschlusseinrichtung (26) in eine Verriegelungsposition zu überführen.

5. Ventil nach Anspruch 4, **dadurch gekennzeichnet, dass** der wenigstens eine Bolzen (32) an der Verschlusseinrichtung (26) angeordnet ist.

6. Ventil nach Anspruch 4 oder 5, **dadurch gekennzeichnet, dass** die Aufnahmeeinrichtung (36) an dem Rahmen (16) angeordnet ist.

7. Ventil nach einem der Ansprüche 4 bis 6, **dadurch gekennzeichnet, dass** an der Verschlusseinrichtung (26) wenigstens eine Feder angeordnet ist, die mit dem wenigstens einen Tragarm (24) zusammenwirkt, um bei einem Verschwenken der Klappen (12, 14) in die Einströmstellung die Verschlusseinrichtung (26) von einer Schließposition in die Verriegelungsposition vorzuspannen.

8. Ventil nach einem der vorhergehenden Ansprüche, **dadurch gekennzeichnet, dass** die erste Klappe (12) und die zweite Klappe (14) über wenigstens eine Koppelstange (40) miteinander verbunden sind.

9. Ventil nach einem der vorhergehenden Ansprüche, **dadurch gekennzeichnet, dass** eine Stelleinrichtung (18) vorgesehen ist, mit der die Klappen (12, 14) in eine Ausström- und eine Einströmstellung verstellbar sind.

10. Ventil nach Anspruch 9, **dadurch gekennzeichnet, dass** über die Stelleinrichtung (18) die Klappen (12, 14) gleichläufig verstellbar sind und dass vorzugsweise die zweite Klappe (14) über eine Stellstange (52) mit der Stelleinrichtung (18) verbunden ist.

11. Ventil nach einem der vorhergehenden Ansprüche, **dadurch gekennzeichnet, dass** die erste Klappe (12) annähernd mittig an dem Rahmen (16) gelagert ist und dass die zweite Klappe (14) randseitig an dem Rahmen (16) gelagert ist.

## Claims

1. A valve for controlling the internal pressure in an aircraft cabin, comprising a first flap (12) and a second flap (14) supported in a frame (16), wherein the flaps (12, 14) control a fluid flow (L) between the environment and the cabin through an opening (20) of the valve (10) that changes the pressure, wherein the first flap (12) is supported at a distance from a front edge of the frame (16) and the second flap (14) on a rear edge of the frame (16), wherein a closing device (26) is provided which, in an inflow position of the flaps (12, 14), closes an outflow opening (56) delimited by the flaps (12, 14), **characterized in that** the closing device (26) is pivotably supported on one of the flaps (12, 14), and that a locking device (34), which cooperates with the closing device (26) in such a way that the closing device (26) closes the outflow opening (56) during a pivoting movement of the flaps (12, 14), is allocated to the closing device (26).

2. The valve according to claim 1, **characterized in that** the closing device (26) is configured as a closing flap.

3. The valve according to claim 1 or 2, **characterized in that** the first flap (12) comprises at least one supporting arm (24) on which the closing device (26) is pivotably supported.

4. The valve according to any one of the preceding claims, **characterized in that** the locking device (34) comprises at least one bolt (32) and an accommodating means (36) cooperating with the bolt (32), wherein, when the flaps (12, 14) are pivoted into the inflow position, the bolt (32) can be accommodated by the accommodating means (36) in order to transfer the closing device (26) into a locking position.

5. The valve according to claim 4, **characterized in that** the at least one bolt (32) is disposed on the closing device (26).

6. The valve according to claim 4 or 5, **characterized in that** the accommodating means (36) is disposed on the frame (16).

7. The valve according to any one of the claims 4 to 6, **characterized in that** at least one spring cooperating with the at least one supporting arm (24) is disposed on the closing device (26), in order to bias the closing device (26) from a closing position into the locking position when the flaps (12, 14) are pivoted into the inflow position.

8. The valve according to any one of the preceding claims, **characterized in that** the first flap (2) and the second flap (14) are interconnected via at least one coupling rod (40).

9. The valve according to any one of the preceding claims, **characterized in that** an actuating device (18) is provided with which the flaps (12, 14) can be adjusted into an outflow and an inflow position.

10. The valve according to claim 9, **characterized in that** the flaps (12, 14) can be adjusted in the same direction by means of the actuating device (18), and that preferably the second flap (14) is connected to the actuating device (18) via an actuating rod (52).

11. The valve according to any one of the preceding claims, **characterized in that** the first flap (12) is supported approximately centrally on the frame (16), and that the second flap (14) is supported at the edge of the frame (16).

## Revendications

1. Soupape pour commander la pression intérieure dans une cabine d'un aéronef, comprenant un premier clapet (12) et un second clapet (14) qui sont montés dans un cadre (16), dans laquelle les clapets (12, 14) commandent un écoulement de fluide (L), modifiant la pression, entre l'environnement et la cabine via une ouverture (20) de la soupape (10), dans laquelle le premier clapet (12) est monté à distance d'une arête antérieure du cadre (16) et le second clapet (14) est monté au niveau d'une arête postérieure du cadre (16), dans laquelle il est prévu un système de fermeture (26) qui, dans une position d'écoulement entrant des clapets (12, 14), ferme une ouverture d'écoulement sortant (56) qui est délimitée par les clapets (12, 14),
**caractérisée en ce que**
le système de fermeture (26) est monté mobile en pivotement sur l'un des clapets (12, 14), et **en ce qu'**un moyen de verrouillage (34) est associé au système de fermeture (26), qui coopère avec le système de fermeture (26) de telle manière que le système de fermeture (26) ferme l'ouverture d'écoulement sortant (56) lors d'un mouvement de pivotement des clapets (12, 14).

2. Soupape selon la revendication 1, **caractérisée en ce que** le système de fermeture (26) est réalisée comme un clapet de fermeture.

3. Soupape selon la revendication 1 ou 2, **caractérisée en ce que** le premier clapet (12) comprend au moins un bras porteur (24) sur lequel le système de fermeture (26) est monté mobile en pivotement.

4. Soupape selon l'une des revendications précédentes, **caractérisée en ce que** le moyen de verrouillage (34) comprend au moins un boulon (32) et un moyen de réception (36) qui coopère avec le boulon (32), de sorte que lors d'un pivotement des clapets (12, 14) dans la position d'écoulement entrant, le boulon (32) est susceptible d'être reçu par le moyen de réception (36) afin de transférer le système de fermeture (26) vers une position de verrouillage.

5. Soupape selon la revendication 4, **caractérisée en ce que** ledit au moins un boulon (32) est agencé sur le système de fermeture (26).

6. Soupape selon la revendication 4 ou 5, **caractérisée en ce que** le moyen de réception (36) est agencé sur le cadre (16).

7. Soupape selon l'une des revendications 4 à 6, **caractérisée en ce qu'**au moins un ressort est agencé sur le système de fermeture (26), ressort qui coopère avec ledit au moins un bras porteur (24) afin, lors d'un pivotement des clapets (12, 14) dans la position d'écoulement entrant, de précontraindre le système de fermeture (26) depuis une position fermée jusque dans la position verrouillée.

8. Soupape selon l'une des revendications précédentes, **caractérisée en ce que** le premier clapet (12) et le second clapet (14) sont reliés l'un à l'autre via au moins une barre d'accouplement (40).

9. Soupape selon l'une des revendications précédentes, **caractérisée en ce qu'**il est prévu un moyen de positionnement (18) au moyen duquel les clapets (12, 14) sont susceptibles d'être positionnés dans une position d'écoulement entrant et dans une position d'écoulement sortant.

10. Soupape selon la revendication 9, **caractérisée en ce que** les clapets (12, 14) sont susceptibles d'être positionnés dans le même sens via le moyen de positionnement (12, 14) et **en ce que** de préférence le second clapet (14) est relié au moyen de positionnement (18) via une tige de positionnement (52).

11. Soupape selon l'une des revendications précédentes, **caractérisée en ce que** le premier clapet (12) est monté approximativement au milieu sur le cadre (16), et **en ce que** le second clapet (14) est monté du côté de la bordure sur le cadre (16).
